# EUROPÄISCHE PATENTANMELDUNG

(11) **EP 4 414 563 A1**
(43) Veröffentlichungstag der Anmeldung: **14.08.2024**
(21) Anmeldenummer: 24156946.6
(22) Anmeldetag: 09.02.2024
(51) Int. Cl.: F15B 11/12, F15B 13/08, F15B 15/14

(54) **FLUID-STEUERUNGSEINHEIT EINER FLUIDANTRIEBSEINHEIT UND LINEARMODUL**

(30) Priorität: 10.02.2023 DE 202023100656 U
(71) Anmelder: Ohrmann GmbH, 59519 Möhnesee (DE)
(72) Erfinder: WIENECKE, Frank, 59519 Möhnesee (DE)
(74) Vertreter: Prinz & Partner mbB

(57) **Zusammenfassung**

Es wird eine Fluid-Steuerungseinheit (44) zum Ansteuern einer Fluidantriebseinheit vorgeschlagen, wobei die Fluidantriebseinheit zwei in dieselben, entgegengesetzten Bewegungsrichtungen antreibende Fluidantriebe aufweist, wobei die Fluid-Steuerungseinheit (44) ein erstes und ein zweites Paar von Fluideingängen (50, 52; 60, 62) und ein erstes und ein zweites Paar von zugeordneten Fluidausgängen (54, 56; 64, 66) aufweist, wobei zugeordnete erste Fluideingänge (50; 60) jedes Paares jeweils über einen ersten, permanent offenen Kanal mit einem ersten Fluidausgang (54; 64) des Paares verbunden sind und zugeordnete zweite Fluideingänge (52; 62) jedes Paares jeweils über einen zweiten Kanal mit einem zweiten Fluidausgang (56; 66) des Paares verbunden sind, und wobei der erste Kanal des ersten Paares über einen Verbindungskanal mit einem Ventil mit dem zweiten Kanal des zweiten Paares verbindbar ist. Weiter wird ein Linearmodul (10) mit einer ersten und einer zweiten fluidisch angetriebenen Kolben-Zylindereinheit (16, 18) vorgeschlagen.

## Beschreibung

Die Erfindung betrifft eine Fluid-Steuerungseinheit zum Ansteuern insbesondere einer Fluidantriebseinheit und ein Linearmodul.

Linearmodule sind Antriebseinheiten, über die ein im einfachsten Fall einstückiges Element längs einer linearen Bahn verfahrbar ist. Die Erfindung betrifft ein fluidisch angetriebenes Linearmodul, welches es erlaubt, eine Befestigungsschnittstelle, an der das anzutreibende, linear zu verfahrende Element befestigbar ist, in drei exakt festlegbaren Stellungen zu positionieren, nämlich einer Ausgangsstellung, einer maximal verfahrenen Endstellung und einer dazwischenliegenden Zwischenstellung.

Solche Linearmodule, die drei Stellungen erlauben, werden bislang dadurch realisiert, dass zwei fluidisch angetriebene Kolben-Zylindereinheiten in Reihenschaltung angeordnet sind. Die zweite Kolben-Zylindereinheit ist mechanisch mit dem Kolben der ersten Kolben-Zylindereinheit, wobei der Kolben der zweiten Kolben-Zylindereinheit dann mit der Schnittstelle fest verbunden ist. Wird beispielsweise nur die erste Kolben-Zylindereinheit auseinandergefahren, ist die Schnittstelle in der Zwischenstellung. Wird auch noch zusätzlich die zweite Kolben-Zylindereinheit auseinandergefahren, wird die Schnittstelle noch weiter verfahren und gelangt dadurch in die Endstellung. Bei dieser Anordnung verfahren die beiden Kolben-Zylindereinheiten beim Ausfahren in dieselbe Richtung.

Natürlich könnten die beiden Kolben-Zylindereinheiten auch in die entgegengesetzten Richtungen verfahren werden. Dann wird beispielsweise die erste Kolben-Zylindereinheit maximal ausgefahren, wobei das die Endstellung darstellt. Die kürzer bauende zweite Kolben-Zylindereinheit, die mit dem Kolben der ersten Kolben-Zylindereinheit gekoppelt ist, kann dann in die Gegenrichtung verfahren werden, um die Zwischenstellung zu erhalten.

Bei diesem Stand der Technik ist es nachteilig, dass die Kabel und Schläuche, die zur zweiten Kolben-Zylindereinheit führen, durch die Bewegung der zweiten Kolben-Zylindereinheit Belastungen unterworfen sind. Dies bedeutet auch, dass es einen erhöhten Montageaufwand für die Befestigung der Kabel und Schläuche gibt und auch einen erhöhten Platzbedarf für diese.

Darüber hinaus wird bei solchen Linearmodulen nach dem Stand der Technik üblicherweise an der ersten Kolben-Zylindereinheit ein Schlitten bewegt, auf dem die zweite Kolben-Zylindereinheit sitzt, die wiederum mit der mechanischen Schnittstelle gekoppelt ist. Auch durch diese Konstruktion erhöhen sich der Bauraum und der Aufwand für das Linearmodul.

Die Erfindung betrifft eine Fluid-Steuerungseinheit, die zum Ansteuern einer Fluidantriebseinheit, insbesondere eines Linearmoduls geeignet ist, mit zwei in dieselben entgegengesetzten Bewegungsrichtungen antreibbaren Fluidantrieben. Diese Fluidantriebe haben jeweils entgegengesetzt wirkende Arbeitskammern, wobei diese bei einer Kolben-Zylindereinheit die beiden durch den Kolben getrennten Arbeitskammern sind, so dass die Fluidantriebe jeweils in entgegengesetzte Richtungen beweglich sind.

Dabei tritt ein Nachteil dann auf, wenn der zweite Fluidantrieb die Fluidantriebseinheit in die Zwischenstellung bewegt. Um hier die Position genauer zu definieren, wird nämlich der erste Fluidantrieb in Rückstellrichtung, also in Richtung zur Ausgangsstellung, druckbeaufschlagt. Damit arbeitet die zweite Fluidantriebseinheit gegen den Druck in der ersten Fluidantriebseinheit an, sodass es dort in einer Arbeitskammer zu einer Druckspitze käme.

Arbeitskammern von beiden Fluidantrieben werden also gegeneinander arbeitend fluidisch zum Beispiel zum Erreichen einer gewünschten Zwischenstellung der Fluidantriebseinheit geschaltet, so dass ein erster Fluidantrieb in einer Bewegungsrichtung weiter verfahren will, der andere aber gegen diese Bewegungsrichtung arbeitet.

Aufgabe der Erfindung ist es, Druckspitzen in der fluidischen Steuereinheit zu reduzieren oder gänzlich zu vermeiden, die insbesondere dann auftreten, wenn die Fluidantriebe in entgegengesetzte Richtungen arbeiten und der insgesamt oder augenblicklich "stärkere" der beiden Fluidantrieben den "schwächeren" entgegen dessen eigentlich geschalteten Bewegungsrichtung bewegt, so dass das Fluid in der fluidbeaufschlagten Arbeitskammer des schwächeren Fluidantriebs von außen druckbeaufschlagt wird, weil diese Arbeitskammer bei der vom stärkeren Fluidantrieb hervorgerufenen Bewegung kleiner wird. Die Aufgabe wird durch Anspruch 1 gelöst.

Die erfindungsgemäße Fluid-Steuerungseinheit hat ein erstes und ein zweites Paar von Fluideingängen und ein erstes und ein zweites Paar von zugeordneten Fluidausgängen. Natürlich können entsprechend weitere Paare von Fluideingängen und Fluidausgängen vorhanden sein. Die zugeordneten ersten Fluideingänge jedes Paares sind jeweils über einen eigenen, ersten, permanent offenen Kanal mit dem ersten Fluidausgang des zugeordneten Paares verbunden. Die zugeordneten zweiten Fluideingänge jedes Paares sind jeweils über einen eigenen, zweiten Kanal mit dem zweiten Fluidausgang des zugeordneten Paares verbunden. Der erste Kanal des ersten Paares ist über einen Verbindungskanal mit dem zweiten Kanal des zweiten Paares verbindbar. Im Verbindungskanal sitzt ein Ventil, welches den Verbindungskanal wahlweise freigeben kann. Die Fluideingänge des ersten Paares sind mit den Arbeitskammern des ersten Fluidantriebs (je ein Fluideingang mit einer Arbeitskammer) gekoppelt und versorgen diese und die Fluideingänge des zweiten Paares sind entsprechend mit den Arbeitskammern des zweiten Fluidantriebs gekoppelt. Je nach Schaltzustand kann Fluid in die oder aus der Arbeitskammer über die Fluideingänge strömen. Das Besondere der erfindungsgemäßen Fluid-Steuerungseinheit besteht darin, dass sie dann, wenn die Fluidantriebe in entgegengesetzte Bewegungsrichtungen beaufschlagt sind und somit gegeneinander arbeiten, durch das Ventil und den Verbindungskanal Druckspitzen in einer durch die Bewegung kleiner werdende Arbeitskammer abbauen kann und damit den Überdruck in dieser Arbeitskammer zum Antrieb in der anderen Arbeitskammer verwenden kann.

Mit anderen Worten: Die Fluid-Steuerungseinheit weist zumindest ein Ventil auf, welches in einem seiner Schaltzustände und dabei zumindest in der Zwischenstellung auf dem Weg zur einen Druckfluidzulauf zu einer Arbeitskammer des ersten Fluidantriebs zum Rückhub des ersten Fluidantriebs strömungsmäßig mit einer Arbeitskammer des zweiten Fluidantriebs zum Vorhub des zweiten Fluidantriebs verbindet, sodass beide Fluidantriebe mit dem Druckfluid versorgt sind. Indem jedoch während dieser Verfahrstrecke das Ventil geöffnet wird, unterstützt dieser Druck im ersten Fluidantriebs das Ausfahren des zweiten Fluidantriebs. Das Ventil kann entweder in der Zwischenstellung entsprechend geschaltet werden, um die Druckspitze in der ersten Kolben-Zylindereinheit zu reduzieren, oder, bevorzugt, schon während des Bewegens aus der Ausgangsstellung in die Zwischenstellung.

Bei Einsatz in dem erfindungsgemäßen Linearmodul ist vorgesehen, dass in der Grundstellung beide Kolben-Zylindereinheiten über die ersten Kanäle so fluidisch beaufschlagt werden, dass sie in die eingefahrene Position gedrückt werden, das heißt im Rückhub beaufschlagt sind. Wird beispielsweise, wie zuvor erwähnt, die zweite Kolben-Zylindereinheit verwendet, um gegen den Druck der im Rückhub beaufschlagten ersten Kolben-Zylindereinheit die Schnittstelle in die Zwischenstellung zu bewegen, wird der ansonsten sich steigernde Druck in der druckbeaufschlagten Arbeitskammer der ersten Kolben-Zylindereinheit dazu verwendet, die zweite Kolben-Zylindereinheit druckzubeaufschlagen, womit Spannungsspitzen vermieden werden. Der Druck in der sich zunehmend reduzierenden Arbeitskammer in der ersten Kolben-Zylindereinheit wird somit nicht über den Ausgangsdruck der Druckquelle steigen.

Insbesondere sind die ersten Kanäle jedes Paares dafür zuständig, die Fluidantriebseinheiten, im vorliegenden Fall bevorzugt die zwei Kolben-Zylindereinheiten im Rückhub, das heißt in Richtung Ausgangsstellung zu beaufschlagen. Die zweiten Kanäle hingegen werden, wenn sie mit Druckfluid beaufschlagt werden, dafür verwendet, die Fluidantriebe in die entgegengesetzte Richtung, das heißt in Richtung Endstellung und damit in Vorhub zu beaufschlagen.

Eine weitere Variante der Erfindung sieht in diesem Zusammenhang vor, dass vom zweiten Kanal des zweiten Paares stromauf einer Mündungsstelle des Verbindungskanals in diesen zweiten Kanal eine erste Steuerleitung zu dem Ventil führt, über die das Ventil in eine Öffnungsstellung bewegt werden kann. Es muss folglich keine eigene Energiezufuhr, zum Beispiel eine elektrische Energiezufuhr, für die Betätigung des zweiten Ventils vorgesehen werden. Es reicht vielmehr aus, den zweiten Kanal des zweiten Paares mit Druckfluid zu beaufschlagen, um das Ventil, welches für den Abbau der Druckspitze verantwortlich ist, in die Offenposition zu bewegen.

Beim Linearmodul wird der zweite Kanal, der eigentlich für die Beaufschlagung der zweiten Kolben-Zylindereinheit in Vorhub druckbeaufschlagt wird, für die Betätigung des Ventils verwendet. Damit ist es möglich, die zweite Kolben-Zylindereinheit für den Vorhub ausschließlich über den zweiten Kanal der ersten Kolben-Zylindereinheit mit Druckfluid zu beaufschlagen, sodass der eigene, zweite Kanal der zweiten Kolben-Zylindereinheit kein Druckfluid bis zur Kolben-Zylindereinheit führen muss.

Wenn im zweiten Kanal des zweiten Paares ein sogenanntes weiteres Ventil sitzt, über das der zweite Kanal wahlweise geöffnet werden kann, lässt sich dieser zweite Kanal beliebig öffnen und schließen; schließen zum Beispiel dann, wenn der zweite Kanal das Druckfluid als Steuerfluid zum vorgenannten Ventil in dem Verbindungskanal führt. Der Verbindungskanal zweigt in diesem Fall stromaufwärts des weiteren Ventils im zweiten Kanal der zweiten Kolben-Zylindereinheit ab.

Vom ersten Kanal des ersten Paares kann eine zusätzliche, zweite Steuerleitung zu dem weiteren Ventil führen, über die das weitere Ventil in eine Öffnungsstellung bewegt werden kann. Das bedeutet, auch vom ersten Paar an Kanälen zweigt eine Steuerleitung zum anderen Paar an Kanälen ab, um das dort sitzende Ventil, hier als weiteres Ventil bezeichnet, zu bewegen, sodass auch hier keine eigene elektrische Energiezufuhr für dieses weitere Ventil notwendig ist.

Beim Linearmodul ist diese zusätzliche, zweite Steuerleitung vorgesehen, um bei der Bewegung von der Zwischenstellung in die Endstellung das weitere Ventil zu öffnen, sodass dann erstmals Druckfluid über den zweiten Kanal der zweiten Kolben-Zylindereinheit in diese unmittelbar einströmt. Nach dem Erreichen der Zwischenstellung muss die erste Kolben-Zylindereinheit die Bewegung der Schnittstelle übernehmen.

In der zweiten Steuerleitung kann ein hin zum ersten Kanal des ersten Paares verschließbares Rückschlagventil sitzen. Dieses Rückschlagventil schließt die zweite Steuerleitung dann, wenn über den zweiten Kanal im zweiten Paar, das heißt im zweiten Kanal der zweiten Kolben-Zylindereinheit, Druckfluid strömt.

Vom ersten Kanal des zweiten Paares kann eine dritte Steuerleitung ausgehen, die in die weitere, das heißt die zweite Steuerleitung stromaufwärts des weiteren Ventils mündet. Über diese dritte Steuerleitung kann das weitere Ventil in eine Öffnungsstellung bewegt werden. Diese Konstruktion erlaubt es, den zweiten Kanal des zweiten Paares dann zu öffnen, wenn über den ersten Kanal des zweiten Paares Druckfluid zum Bewegen der zweiten Fluidantriebseinheit ansteht. Somit ist ein automatischer Öffnungsvorgang, ohne dass es einer weiteren Steuerung oder elektrischer Antriebe bedarf, ermöglicht.

Wird die zweite Kolben-Zylindereinheit folglich im Rückhub betätigt, wird der zweite Kanal des zweiten Paares automatisch geöffnet.

In dieser dritten Steuerleitung kann ein hin zum ersten Kanal des zweiten Paares verschließbares Rückschlagventil sitzen. Damit wird automatisch die dritte Steuerleitung beispielsweise dann geschlossen, wenn über die erste Steuerleitung, das heißt die Steuerleitung vom ersten Kanal des ersten Paares, Druckfluid zum Bewegen des weiteren Ventils in die zweite Steuerleitung, die zu diesem weiteren Ventil führt, gelangt.

Wenn stromabwärts des ersten Ventils, welches in dem Verbindungskanal sitzt, ein in Richtung zu diesem Ventil verschließbares Rückschlagventil in dem Verbindungskanal positioniert wird, wird verhindert, dass im Vorhub der zweiten Kolben-Zylindereinheit Druckfluid in den ersten Kanal des ersten Paares gelangt.

Eine besonders kostengünstige Variante der erfindungsgemäßen Fluid-Steuerungseinheit wird dadurch erreicht, dass alle ersten und zweiten Kanäle, der Verbindungskanal und die Steuerleitungen in einem durch ein additives Herstellungsverfahren erzeugten ein- oder mehrteiligen, verrohrungsfreien Körper ausgebildet sind und dass zumindest ein Ventil, ferner, falls vorhanden, auch das weitere Ventil und, falls vorhanden, auch ein oder mehrere Rückschlagventile, in dem Körper sitzen.

Die verrohrungsfreie Ausbildung reduziert vor allem die Montagekosten und schließt einen Fehlanschluss der zahlreichen ansonsten notwendigen Schläuche aus.

Insbesondere umfasst dieser verrohrungsfreie, durch ein additives Herstellungsverfahren hergestellte Körper einen Grundkörper und einen darauf aufgesetzten Deckel, in dem gegebenenfalls auch Kanäle oder Kanalabschnitte ausgeführt sein können. Durch die Zweiteilung des Körpers ist es möglich, das oder die Ventile einzubauen.

Dieser verrohrungsfreie Körper ist eine sehr schnell und einfach einzusetzende und einzubauende Komponente, die eine sichere, reproduzierbare Funktion ermöglicht. Um die jeweiligen ersten und zweiten Kanäle mit einer Druckfluidquelle wahlweise zu koppeln, sieht die Fluid-Steuerungseinheit vor, dass stromaufwärts jedes Paares von Fluideingängen ein Steuerungsventil sitzt, über das wahlweise der jeweils erste oder zweite Fluideingang des entsprechenden Paares mit der Druckfluidquelle koppelbar ist. Diese Steuerungsventile können dann die einzigen elektrisch ansteuerbaren Ventile sein, die für die Funktion der Fluidantriebseinheit, insbesondere des Linearmoduls, notwendig sind.

Die Erfindung schafft ferner ein Linearmodul mit einer ersten fluidisch angetriebenen Kolben-Zylindereinheit und einer zweiten fluidisch angetriebenen Kolben-Zylindereinheit, die einen geringeren maximalen Hubweg als die erste Kolben-Zylindereinheit hat, wobei beide Kolben-Zylindereinheiten parallele Bewegungsrichtungen und jeweils einen Kolben und einen Zylinder aufweisen, von denen einer ein feststehendes Teil und der andere ein angetriebenes Element ist, und einer Schnittstelle, an der ein durch das Linearmodul linear verfahrbares Element befestigbar ist, wobei die beiden feststehenden Teile stationär befestigt sind und nicht bewegt werden und das angetriebene Teil der ersten Kolben-Zylindereinheit mit der Schnittstelle fest gekoppelt ist, um diese zwischen einer eingefahrenen Ausgangsstellung und einer maximal verfahrbaren Endstellung zu verstellen, und wobei das angetriebene Teil der zweiten Kolben-Zylindereinheit in einer wahlweise zuschaltbaren Zwischenstellung zwischen Ausgangs- und Endstellung mechanisch die Bewegung der ersten Kolben-Zylindereinheit blockiert. Eine Fluid-Steuerungseinheit nach der Erfindung ist vorgesehen, welche die beiden Kolben-Zylindereinheiten steuert und das Ventil, welches den Verbindungskanal wahlweise freigeben kann, in einem seiner Schaltzustände und zumindest in der zuschaltbaren Zwischenstellung einen Druckfluidzulauf zu einer Arbeitskammer der ersten Kolben-Zylindereinheit zum Rückhub der ersten Kolben-Zylindereinheit strömungsmäßig mit einer Arbeitskammer der zweiten Kolben-Zylindereinheit zum Vorhub der zweiten Kolben-Zylindereinheit verbindet, so dass beide Kolben-Zylindereinheiten mit dem Druckfluid versorgt sind

Das erfindungsgemäße Linearmodul zeichnet sich unter anderem dadurch aus, dass die Kolben-Zylindereinheiten nicht wie im Stand der Technik hintereinandergeschaltet sind, sodass die erste Kolben-Zylindereinheit die zweite Kolben-Zylindereinheit verfährt, sondern dass beide Kolben-Zylindereinheiten entweder mit dem Zylinder oder mit dem Kolben feststehen und das jeweilige andere Teil allein beweglich ist. Dies führt zu einem geringeren Platzbedarf. Darüber hinaus ist die Konstruktion auch sehr stabil auszuführen, denn die beiden Kolben-Zylindereinheiten sind nicht in Reihe hintereinander oder auch aufeinander, wie im Stand der Technik, angeordnet.

Wenn die feststehenden Teile die Zylinder sind, sind die fluidführenden Schläuche und gegebenenfalls auch Kabel, die zum Zylinder führen, unbewegt, denn beide Zylinder stehen stets fest, egal in welcher Stellung sich das Linearmodul befindet.

Die Befestigungsschnittstelle ist insbesondere eine Platte, an der das zu befestigende Teil angeflanscht werden kann.

Diese Platte ist insbesondere an einer Linearführung gelagert und bildet eine Art Schlitten.

Wenn beide Kolben-Zylindereinheiten in Seitenansicht der Platte vollständig unterhalb einer Oberseite der Platte angeordnet sind, können an der Oberseite auskragende Teile befestigt werden, sodass das Linearmodul sehr variabel einsetzbar ist.

Die Kolben-Zylindereinheiten sind vorzugsweise nebeneinander angeordnet, um Platz zu sparen. Die Erfindung sieht gemäß einer Variante vor, dass beide Kolben-Zylindereinheiten die Schnittstelle bewegen können und damit für bestimmte Bewegungsrichtungen und Hubstrecken zuständig sind.

Die zweite Kolben-Zylindereinheit kann beispielsweise nur über einen Teil der Bewegungsstrecke der Schnittstelle mit dieser in Bewegungsrichtung gekoppelt sein und in einer Teilstrecke zwischen der Zwischenstellung und der Endstellung von der Schnittstelle in Bewegungsrichtung entkoppelt sein.

Damit kann die zweite Kolben-Zylindereinheit die Schnittstelle in die Zwischenstellung bewegen und die erste Kolben-Zylindereinheit von der Zwischenstellung in die Endstellung. Nachdem jedoch die zweite Kolben-Zylindereinheit auf diesem Weg in die Endstellung nicht mehr mit der Schnittstelle gekoppelt ist, muss die erste Kolben-Zylindereinheit die Schnittstelle zurück in die Ausgangsstellung bewegen, wobei auch in dieser Richtung die Zwischenstellung angefahren werden kann.

Die Kolben-Zylindereinheiten sind gemäß einer Variante so ausgebildet, dass die erste Kolben-Zylindereinheit die Schnittstelle von der Endstellung bis in die Grundstellung bewegt und die zweite Kolben-Zylindereinheit in ihrer maximal ausgefahrenen Stellung bei einer Bewegung der Schnittstelle von der Endstellung in die Grundstellung einen Anschlag für die Schnittstelle in der Zwischenstellung bildet. Hier bildet die zweite Kolben-Zylindereinheit einen mechanischen Anschlag für die Schnittstelle, sodass die Zwischenstellung sehr genau angefahren werden kann.

Die erste Kolben-Zylindereinheit kann einen geringeren Zylinderquerschnitt als die zweite Kolben-Zylindereinheit haben. Zusätzlich oder alternativ kann die Rückzugskraft der ersten Kolben-Zylindereinheit in Richtung zur Ausgangsstellung kleiner als die Vorschubkraft der zweiten Kolben-Zylindereinheit in Gegenrichtung sein.

Diese Variante wird dann vorteilhaft, wenn in der Zwischenstellung oder von der Ausgangs- in die Zwischenstellung beide Kolben-Zylindereinheiten in entgegengesetzte Richtungen arbeiten, um die Zwischenstellung zu halten beziehungsweise die Schnittstelle in mechanischer Kopplung mit der zweiten Kolben-Zylindereinheit beim Verfahren in die Zwischenstellung zu halten. Wenn die erste Kolben-Zylindereinheit mehr Kraft in Richtung Ausgangsstellung hätte als die zweite Kolben-Zylindereinheit in Gegenrichtung, würde sie zu einer Bewegung der Schnittstelle führen. Wenn allerdings die zweite Kolben-Zylindereinheit stabil in Position bleibt, ist auch die Position der Schnittstelle in der Zwischenstellung stabil. Zugleich ist es allerdings von Vorteil, wenn die erste Kolben-Zylindereinheit gegen die zweite Kolben-Zylindereinheit arbeitet, damit eine Bewegung der Schnittstelle in Richtung Endstellung verhindert wird.

Die Fluid-Steuerungseinheit ist insbesondere so ausgebildet, dass bei Bewegen der Schnittstelle von der Ausgangs- in die Zwischenstellung die zweite Kolben-Zylindereinheit in Vorhub (das heißt in Richtung zur ausgefahrenen Position) und die erste Kolben-Zylindereinheit in Rückhub (das heißt in Richtung zur eingefahrenen Position) fluidisch geschaltet sind.

Weitere Merkmale und Vorteile der Erfindung ergeben sich aus der Beschreibung und aus den nachfolgenden Zeichnungen, auf die Bezug genommen wird. In den Zeichnungen zeigen:
- Figur 1 ein erfindungsgemäßes Linearmodul als Beispiel einer Fluid-Steuerungseinheit in Perspektivansicht und in Ausgangsstellung,
- Figur 2 das Linearmodul in Perspektivansicht in einer Zwischenstellung,
- Figur 3 das Linearmodul in Perspektivansicht in einer Endstellung,
- Figur 4 eine erfindungsgemäße Fluid-Steuerungseinheit, die Teil des Linearmoduls nach der Erfindung sein kann,

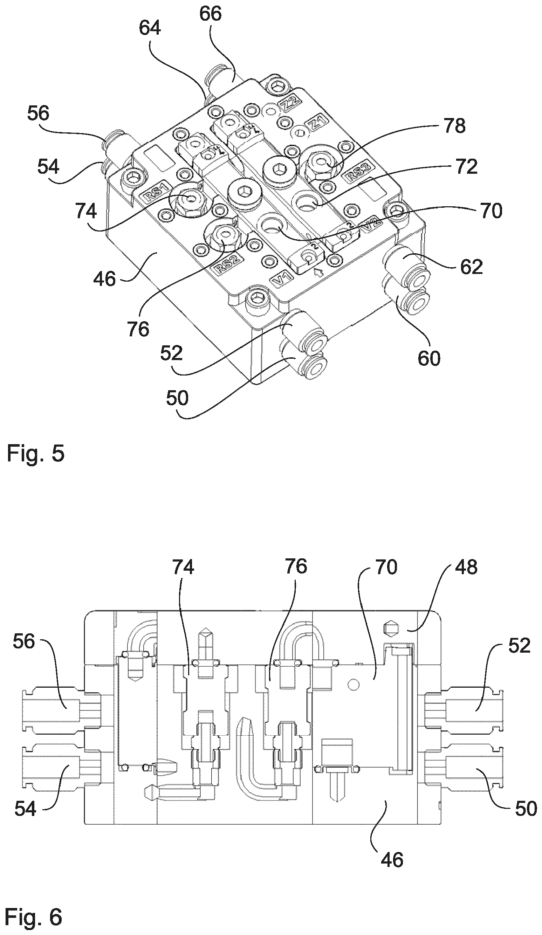

- Figur 5 die Fluid-Steuerungseinheit nach Figur 4 mit abgenommenem Deckel,
- Figur 6 die Fluid-Steuerungseinheit nach Figur 4 in einer Schnittansicht,
- Figur 7 einen Schaltkreis der Fluid-Steuerungseinheit nach der Erfindung, die den Zustand in der Ausgangsstellung des Linearmoduls wiedergibt,
- Figur 8 den Schaltkreis nach Figur 7, die die Situation von der Grundstellung in die Zwischenstellung wiedergibt, und
- Figur 9 den Schaltkreis, der die Situation von der Endstellung in die Ausgangsstellung wiedergibt.

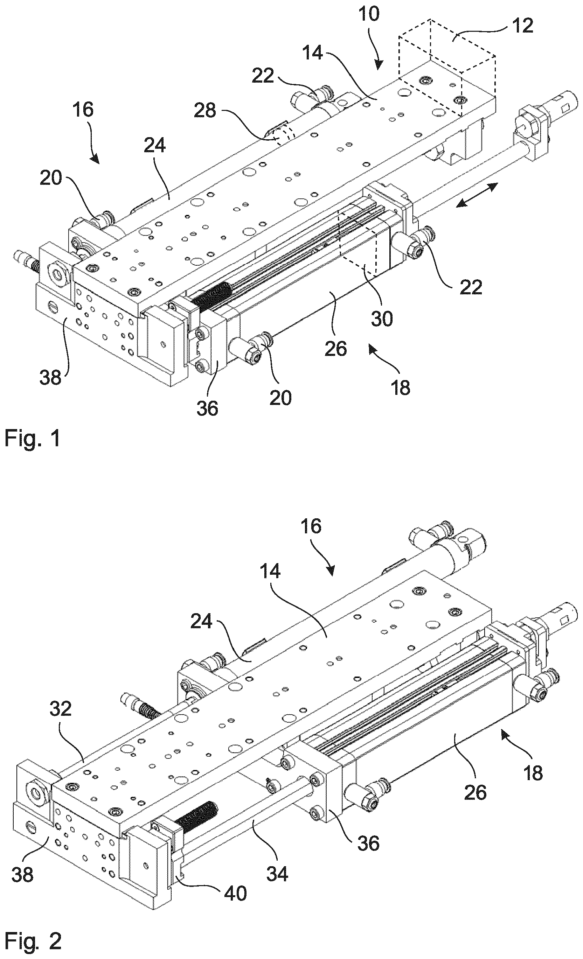

In Figur 1 ist eine Fluidantriebseinheit in Form eines Linearmoduls 10 dargestellt, welches hier pneumatisch angetrieben wird.

Mithilfe dieses Linearmoduls 10 wird ein Element 12, das auch eine Baugruppe oder dergleichen sein kann, längs einer linearen Bewegungsbahn hin- und herbewegt, wie durch den Doppelpfeil symbolisiert.

Das Element 12 wird an einer Schnittstelle 14 in Form einer Platte mit dem Linearmodul 10 verbunden und dort beispielsweise angeflanscht.

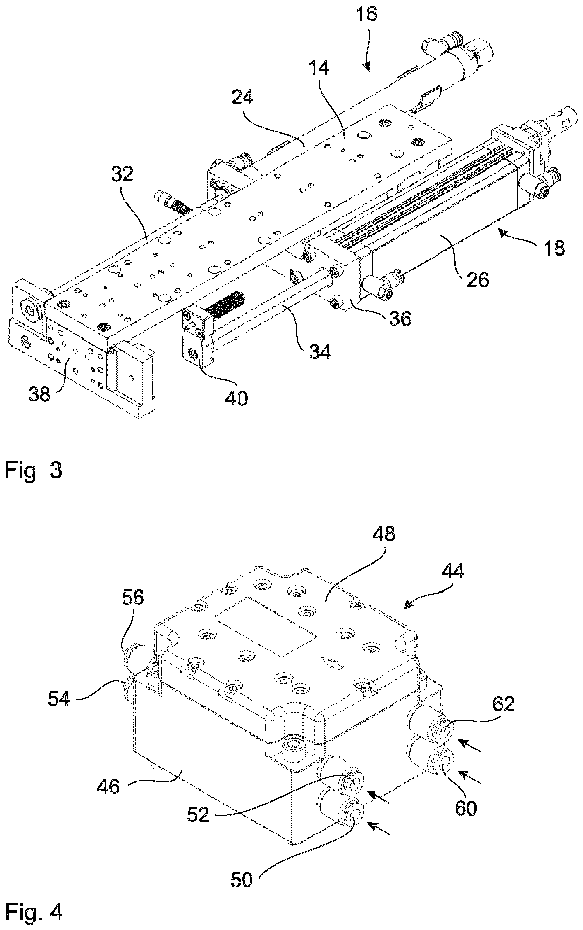

Das Linearmodul 10 weist insgesamt drei verschiedene, vorgegebene, lagestabile sowie genauer einstellbare Positionen für das Element 12 auf, nämlich eine Ausgangsstellung in Figur 1, eine Zwischenstellung in Figur 2 und eine Endstellung in Figur 3.

Diese drei Stellungen werden mithilfe von zwei Kolben-Zylindereinheiten, nämlich einer ersten Kolben-Zylindereinheit 16 und einer zweiten Kolben-Zylindereinheit 18 realisiert.

Die erste Kolben-Zylindereinheit 16 hat einen größeren maximalen Hubweg als die zweite Kolben-Zylindereinheit 18, die für das Erreichen und Halten der Zwischenstellung verantwortlich ist. Hingegen ist die erste Kolben-Zylindereinheit 16 für das Erreichen der Endstellung und Rückstellen in die Ausgangsstellung verantwortlich, nachdem sie den maximalen Hubweg hat.

Die von den beiden Kolben-Zylindereinheiten 16, 18 aufgebrachte Kraft ist unterschiedlich groß, was dadurch erreicht wird, dass der Kolben 28 der ersten Kolben-Zylindereinheit 16 eine kleinere Fläche hat als der Kolben 30 der zweiten Kolben-Zylindereinheit 18.

Beide Kolben-Zylindereinheiten 16, 18 sind über entsprechende Anschlüsse 20, 22, die jeweils entgegengesetzte, durch den jeweiligen Kolben 28, 30 voneinander getrennte Arbeitskammern befüllen können, in beide Richtung druckfluidbeaufschlagbar.

In Figur 1 ist zu erkennen, dass beide Kolben-Zylindereinheiten 16, 18 unterhalb der Oberseite der Platte, die die Schnittstelle bildet, liegen.

Darüber hinaus verlaufen beide Kolben-Zylindereinheiten 16, 18 parallel zueinander, das heißt, sie haben parallele Bewegungsrichtungen und sind, wie man in Figur 1 sieht, auch nebeneinander angeordnet, in Draufsicht seitlich der Platte.

Die Zylinder 24, 26 der Kolben-Zylindereinheiten 16, 18 sind dabei räumlich feststehend, sodass die schematisch dargestellten Kolben 28, 30 mit ihren Kolbenstangen 32 beziehungsweise 34 die angetriebenen Teile der jeweiligen Kolben-Zylindereinheiten 16, 18 bilden.

Beide Zylinder 24, 26 sind an ihrer Vorderseite, an der die Kolbenstangen 32, 34 die entsprechende Stirnwand durchdringen, an einem stationären Sockelteil 36 befestigt.

Das freie Ende der Kolbenstange 32, die der Kolben-Zylindereinheit 16 zugeordnet ist, ist an einem Verbindungsteil 38 permanent befestigt, das wiederum mit der Schnittstelle 14 permanent verbunden ist.

Das freie Ende der anderen Kolbenstange 34 weist ein Anschlagteil 40 (siehe Figur 2) auf, das im Hubweg zwischen der Ausgangsstellung und der Zwischenstellung gegen das Verbindungsteil 38 drücken kann.

Die Zwischenstellung (Figur 2) wird im Übrigen durch den maximalen Hubweg, den die zweite Kolben-Zylindereinheit 18 erreichen kann, definiert.

Um die beiden Kolben-Zylindereinheiten 16, 18 entsprechend mit Druckfluid, hier Druckluft, anzusteuern, ist eine Fluid-Steuerungseinheit 44 vorhanden, die einfach aufgebaut ist und vor allem sehr montagesicher ist.

Die Fluid-Steuerungseinheit 44, die in Figur 4 dargestellt ist, umfasst einen durch ein generatives Herstellungsverfahren erzeugten zweiteiligen Körper mit einem Unterteil 46 und einem Deckel 48, durch die zahlreiche Kanäle hindurchgehen, welche nachfolgend noch erläutert werden.

Die Fluid-Steuerungseinheit 44 umfasst ein erstes Paar von Fluideingängen 50, 52 und ein zugeordnetes erstes Paar von Fluidausgängen 54, 56 für die Kolben-Zylindereinheit 16. Darüber hinaus ist ein zweites Paar von Fluideingängen 60, 62 sowie ein zweites Paar von zugeordneten Fluidausgängen 64, 66 für die zweite Kolben-Zylindereinheit 18 vorgesehen.

Der Fluidausgang 54 ist mit dem Anschluss 20 der Kolben-Zylindereinheit 16 und der Fluidausgang 64 mit dem Anschluss 20 der zweiten Kolben-Zylindereinheit 18 strömungsverbunden. Der Fluidausgang 56 ist mit dem Anschluss 22 der ersten Kolben-Zylindereinheit 16 und der Fluidausgang 66 mit dem Anschluss 22 der zweiten Kolben-Zylindereinheit 18 ebenfalls permanent verbunden.

Im Inneren des zweiteiligen Körpers sind pneumatisch betätigbare Ventile 70, 72 (Letzteres wird auch als weiteres Ventil bezeichnet) vorhanden. Darüber hinaus sind Rückschlagventile 74, 76, 78 ebenfalls integriert.

Die Kanalführungen im Inneren dieses zweiteiligen Körpers sind komplex und nur durch das generative Herstellungsverfahren realisierbar.

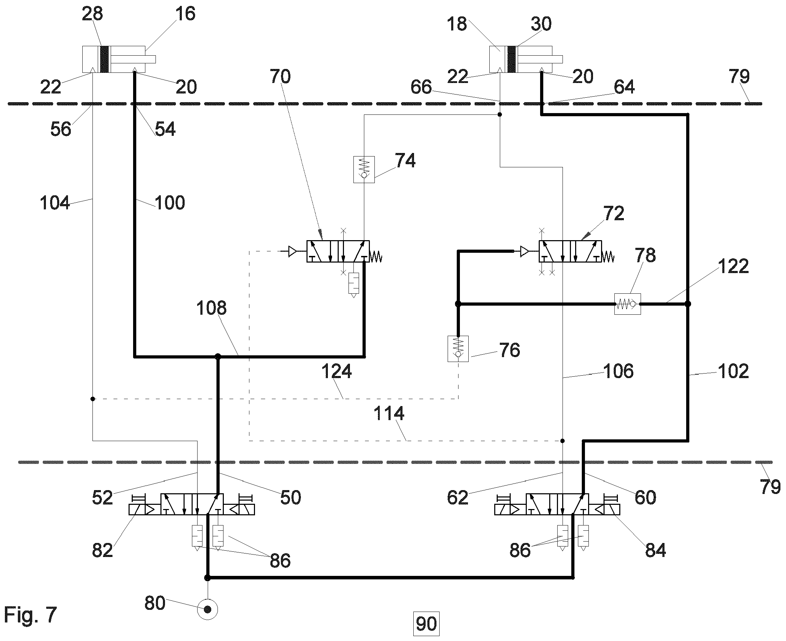

Anhand von Figur 7 wird die Pneumatikschaltung der Fluid-Steuerungseinheit 44 nachfolgend erläutert. Die unterbrochene Linie 79 symbolisiert Stirnenden der Fluid-Steuerungseinheit 44.

Die Fluideingänge 50, 52, zuvor als erstes Paar von Fluideingängen bezeichnet, können wahlweise mit einer Druckfluidquelle 80 gekoppelt werden, ebenso wie die Fluideingänge 60, 62 des zweiten Paares von Fluideingängen.

Hierzu ist ein erstes elektrisch betätigbares Steuerungsventil 82 vorgesehen, welches wahlweise entweder den ersten Fluideingang 50 oder den zweiten Fluideingang 52 mit der Druckfluidquelle 80 koppelt.

Ein entsprechendes zweites Steuerungsventil 84 kann dann entweder den ersten Fluideingang 60 oder den zweiten Fluideingang 62 des zweiten Paares von Fluideingängen mit der Druckfluidquelle 80 koppeln. Mit dem Bezugszeichen 86 sind Schalldämpfer bezeichnet, über die Druckluft bei entsprechender Schaltungsstellung abgelassen werden kann.

Die Steuerungsventile 82, 84 sind mit einer elektronischen Steuereinheit 90 gekoppelt.

Nachfolgend wird der pneumatische Schaltplan im Inneren des zweiteiligen Körpers beschrieben.

Der erste Fluideingang 50 ist über einen eigenen, ersten, permanent offenen Kanal 100 mit dem ersten Fluidausgang 54 verbunden. Der Kanal 100 dient folglich dazu, den Kolben 28 der ersten Kolben-Zylindereinheit 16 in den Rückhub zu bringen.

Der erste Fluideingang 60 ist über einen eigenen, ersten, permanent offenen Kanal 102 mit dem Fluidausgang 64 verbunden, um für den Rückhub des Kolbens 30 der zweiten Kolben-Zylindereinheit 18 zu sorgen.

Der zweite Fluideingang 52 ist über einen zweiten Kanal 104 der ersten Kolben-Zylindereinheit 16 und damit der ersten Paare von Fluideingängen und Fluidausgängen mit dem zweiten Fluidausgang 56 verbunden, wobei auch dieser Kanal 104 permanent offen ist. Wird der zweite Fluidausgang 56 mit Druckfluid versorgt, wird der Kolben der ersten Kolben-Zylindereinheit 16 in Vorhub angesteuert.

Der zweite Fluideingang 62 der zweiten Kolben-Zylindereinheit 18 und damit der zweiten Paare an Fluideinlässen und Fluidauslässen ist über einen schaltbaren Kanal 106 mit dem zweiten Fluidausgang 66 verbunden und für den Vorhub des Kolbens 30 der zweiten Kolben-Zylindereinheit 18 verantwortlich.

Von dem Kanal 100 zweigt ein Verbindungskanal 108 ab, der zu dem zweiten Kanal 106 führt. In diesem Verbindungskanal 108 ist das durch Druckfluid schaltbare Ventil 70 vorgesehen, welches ein normally-closed-Ventil ist. Zwischen der Mündung des Verbindungskanals 108 in den Kanal 106 und dem Ventil 70 ist ein in Richtung zum Ventil 70 in der Schließstellung beaufschlagtes Rückschlagventil 74 in dem Verbindungskanal 108 vorgesehen.

Eine Steuerleitung, im Folgenden erste Steuerleitung 114 genannt, verbindet den zweiten Kanal 106 mit dem Ventil 70 und dient dazu, bei Druckbeaufschlagung das Ventil 70 in eine Öffnungsstellung zu bewegen, in der der Verbindungskanal 108 offen ist.

Stromabwärts der Abzweigungsstelle für die erste Steuerleitung 114 ist im Kanal 106 ein weiteres durch Druckfluid schaltbares Ventil 72 vorgesehen, das in der Ausgangsstellung ebenfalls geschlossen ist (normally closed) und daher den Kanal 106 schließt.

Eine zweite Steuerleitung 122 führt vom ersten Kanal 102 zum weiteren Ventil 72 und dient bei Druckbeaufschlagung dazu, das Ventil 72 in die Öffnungsstellung zu bewegen, um den zweiten Kanal 106 zu öffnen.

In dieser zusätzlichen Steuerleitung 122, auch zweite Steuerleitung genannt, sitzt ein Rückschlagventil 78, welches in Richtung zum ersten Kanal 102 in Schließstellung ist.

Eine dritte Steuerleitung 124 zweigt vom zweiten Kanal 104 des ersten Paares von Fluideingängen und Fluidausgängen ab und mündet in die zweite Steuerleitung 122, wobei in dieser dritten Steuerleitung 124 ein Rückschlagventil 76 vorhanden ist, welches in Richtung zum zweiten Kanal 104 in der Schließstellung ist.

Im Folgenden wird die Funktionsweise des Linearmoduls in seinen verschiedenen Stellungen beschrieben.

In der Ausgangsstellung (siehe Figur 7) soll sichergestellt sein, dass die Schnittstelle 14 stabil positioniert ist und auch nicht, bezogen auf Figur 1, nach links verschoben werden kann.

Die Schnittstelle 14, das heißt die Platte, ist an einer Linearführung, die unterhalb der Platte sitzt, spielarm oder spielfrei gelagert.

Damit keine Bewegung der Schnittstelle 14 stattfindet, sind die Steuerungsventile 82, 84 in eine Position gebracht, in der die ersten Fluideingänge 50, 60 mit Druckfluid versorgt sind, sodass die Kolben-Zylindereinheiten 16, 18 in Rückhub beansprucht sind, sodass das Verbindungsteil 38 an einem für die Ausgangsstellung verantwortlichen mechanischen Endanschlag drückt.

Für die Bewegung von der Ausgangsstellung in die Zwischenstellung ist die zweite Kolben-Zylindereinheit 18 verantwortlich. Damit während dieser Bewegung die Schnittstelle 14 immer an die Bewegung der zweiten Kolben-Zylindereinheit gekoppelt ist, schiebt einerseits der Kolben 30 das Verbindungsteil 38 und andererseits versucht die Kolben-Zylindereinheit 16 in die Gegenrichtung zu drücken. Damit ist sichergestellt, dass das Verbindungsteil 38 immer das Anschlagteil 40 während dieser Bewegungsstrecke kontaktiert, denn das Anschlagteil 40 ist nur in Vorhub, also in einer Richtung mit dem Verbindungsteil 38 gekoppelt, ansonsten von ihm entkoppelt.

Da die Kolben-Zylindereinheit 18 eine höhere Vorschubkraft hat als die von der Kolben-Zylindereinheit 16 bereitgestellte Rückzugskraft, ist sichergestellt, dass eine Bewegung von der Ausgangsstellung in die Zwischenstellung möglich ist.

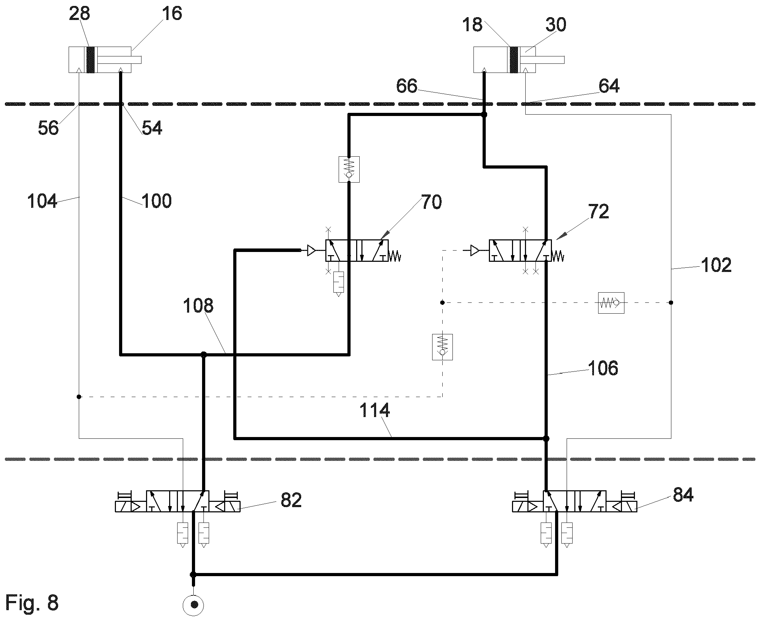

In Figur 8 ist der Pneumatikschaltkreis für die Bewegung von der Ausgangs- in die Zwischenstellung dargestellt. Das Steuerungsventil 84 wurde hierzu umgeschaltet, sodass Druckfluid über den ersten Teil des Kanals 106 in die zweite Steuerleitung 114 strömt und von dort aus zum ersten Ventil 70, um dieses zu öffnen. Da das weitere, zweite Ventil 72 jedoch weiterhin geschlossen ist, kann über dieses Ventil 72 kein Druckfluid, welches das Steuerungsventil 84 durchströmt, zur Kolben-Zylindereinheit 18 gelangen. Jedoch gelangt durch das offene, erste Ventil 70 Druckfluid von dem ersten Kanal 100 über den Verbindungskanal 108 zum zweiten Fluidausgang 66 und damit in denjenigen Arbeitsraum in der Kolben-Zylindereinheit 18, die für den Vorhub verantwortlich ist. Gleichzeitig bleibt die Rückhub-Schaltung für die erste Kolben-Zylindereinheit 16 erhalten.

Wenn der Kolben 28 der ersten Kolben-Zylindereinheit 16 durch die größere Vorschubkraft der zweiten Kolben-Zylindereinheit 18 entgegen dem Druck für den Rückhub weiter in Richtung Vorhub verstellt wird, erhöht sich der Druck in der entsprechenden Arbeitskammer in der Kolben-Zylindereinheit 16, der allerdings durch das Öffnen des Verbindungskanals 108 für den Vorhub der zweiten Kolben-Zylindereinheit 18 verwendet und damit abgebaut wird.

Die Kanäle 104 und 102 sind in dieser Position für Fluidausgang offen, sodass die mit ihnen verbundenen Arbeitskammern keinen Widerstand bei der Verschiebung hervorrufen.

Wenn die Zwischenstellung erreicht ist, kann sie durch Beibehalten der Schaltstellung nach Figur 8 stabil gehalten werden, denn der Kolben 30 kann nicht weiter verfahren werden und steht an einem Anschlag an. Für diese Zwischenstellung wirkt dann die Kolben-Zylindereinheit 18 als mechanischer Anschlag.

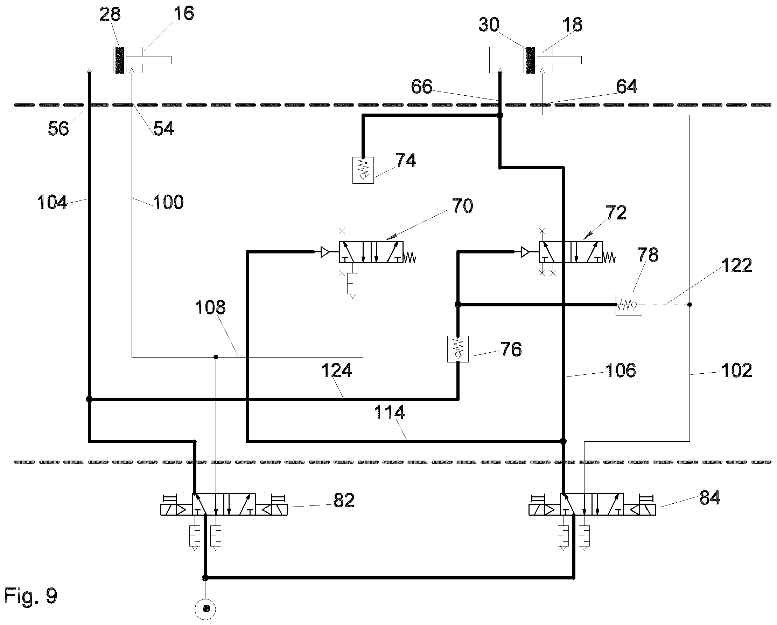

Wenn dann die Schnittstelle 14 noch weiter verfahren werden soll, wird die Fluid-Steuerungseinheit 44 in die in Figur 9 dargestellte Schaltstellung gebracht. Hierzu wird das Steuerungsventil 82, welches in der Zwischenstellung noch so wie in der Ausgangsstellung positioniert war, geschaltet, sodass der zweite Kanal 104 mit der Druckfluidquelle 80 verbunden ist. Das Steuerungsventil 84 bleibt in derselben Position wie in der Zwischenstellung, das heißt, hier ist der Kanal 106 druckfluidbeaufschlagt.

Wenn der Kanal 106 druckbeaufschlagt ist, ist somit auch das erste Ventil 70 offen.

Durch Druckbeaufschlagung des zweiten Kanals 104 gelangt das Druckfluid über die weitere, zweite Steuerleitung 124 zum zweiten, weiteren Ventil 72 und öffnet dieses. Damit kann Druckfluid über den zweiten Kanal 106 zum zweiten Fluidausgang 66 gelangen, um die zweite Kolben-Zylindereinheit 18 weiter komplett ausgefahren zu halten. Alternativ wird das Steuerungsventil 84 wieder umgeschaltet, sodass der Kolben 30 wieder in die Ausgangsstellung zurückgefahren wird.

Nachdem Druckfluid über den offenen Kanal 104 zu der ersten Kolben-Zylindereinheit 16 gelangt, sorgt es dort ebenfalls für einen Vorhub. Damit drückt die Kolbenstange 32 das Verbindungsteil 38 noch weiter weg von der Anfangsstellung, und das Anschlagteil 40 verliert seinen Kontakt mit dem Verbindungsteil 38. Wenn dann der Kolben 28 in seine Endlage kommt, ist die Endstellung erreicht.

Zu betonen ist, dass die Endlagen der Kolben 28, 30 auch über verstellbare mechanische Anschläge variierbar sind, sodass man die Zwischenstellung und die Endstellung variabel einstellen kann.

Die Kanäle 100 und 102 sind während dieser Bewegung in die Endstellung offen, um Druckfluid von der entsprechenden Kolben-Zylindereinheit 16, 18 abzuführen.

Trotz des offenen Ventils 70 strömt kein Druckfluid über den Verbindungskanal 108 ausgehend vom zweiten Kanal 106 in den ersten Kanal 100, weil das Rückschlagventil 74 in dieser Richtung wirkt.

Das Rückschlagventil 78 sorgt dafür, dass kein Druckfluid aus dem Kanal 104 in den Kanal 102 gelangt.

Wird später die Schnittstelle 14 in Richtung zur Zwischenstellung verfahren, muss vorher das Steuerungsventil 82 umgeschaltet werden. Das Steuerungsventil 84 kann in der dargestellten Stellung bleiben.

Der Teilhub von der Zwischenstellung in die Ausgangsstellung erfolgt dadurch, dass das Steuerungsventil 84 umgeschaltet wird, sodass die Kolben-Zylindereinheit 18 in Rückhub ist, wogegen das Steuerungsventil 82 in der vorhergehenden Position verbleibt.

## Patentansprüche

1. Fluid-Steuerungseinheit (44) zum Ansteuern einer Fluidantriebseinheit, insbesondere eines Linearmoduls (10), wobei die Fluidantriebseinheit zwei in dieselben, entgegengesetzten Bewegungsrichtungen antreibende Fluidantriebe aufweist, welche jeweils entgegengesetzt wirkende Arbeitskammern haben, **dadurch gekennzeichnet, dass**
a) die Fluid-Steuerungseinheit (44) ein erstes und ein zweites Paar von Fluideingängen (50, 52; 60, 62) und ein erstes und ein zweites Paar von zugeordneten Fluidausgängen (54, 56; 64, 66) aufweist,
b) wobei zugeordnete erste Fluideingänge (50; 60) jedes Paares jeweils über einen eigenen, ersten, permanent offenen Kanal (100; 102) mit einem ersten Fluidausgang (54; 64) des zugeordneten Paares verbunden sind und
c) zugeordnete zweite Fluideingänge (52; 62) jedes Paares jeweils über einen eigenen, zweiten Kanal (104; 106) mit einem zweiten Fluidausgang (56; 66) des zugeordneten Paares verbunden sind, und
d) wobei der erste Kanal (100) des ersten Paares über einen Verbindungskanal (108) mit dem zweiten Kanal (106) des zweiten Paares verbindbar ist und im Verbindungskanal (108) ein Ventil (70) sitzt, welches den Verbindungskanal wahlweise freigeben kann.

2. Fluid-Steuerungseinheit (44) nach Anspruch 1, **dadurch gekennzeichnet, dass** vom zweiten Kanal (106) des zweiten Paares stromauf einer Mündungsstelle des Verbindungskanals (108) in diesen zweiten Kanal (106) eine erste Steuerleitung (114) zu dem Ventil (70) führt, über die das Ventil (70) in eine Öffnungsstellung bewegt werden kann.

3. Fluid-Steuerungseinheit (44) nach Anspruch 1 oder 2, **dadurch gekennzeichnet, dass** im zweiten Kanal (106) des zweiten Paares ein weiteres Ventil (72) sitzt, über das der zweite Kanal (106) wahlweise geöffnet werden kann.

4. Fluid-Steuerungseinheit (44) nach Anspruch 3, **dadurch gekennzeichnet, dass** vom ersten Kanal (100) des ersten Paares eine zweite Steuerleitung (124) zu dem weiteren Ventil (72) führt, über die das weitere Ventil (72) in eine Öffnungsstellung bewegt werden kann, insbesondere wobei in der zweiten Steuerleitung (124) ein hin zum ersten Kanal (100) des ersten Paares verschließbares Rückschlagventil (76) sitzt.

5. Fluid-Steuerungseinheit (44) nach Anspruch 4, **dadurch gekennzeichnet, dass** vom ersten Kanal (102) des zweiten Paares eine dritte Steuerleitung (122) ausgeht, die in die zweite Steuerleitung (124) stromaufwärts des weiteren Ventils (72) mündet, über die das weitere Ventil (72) in eine Öffnungsstellung bewegt werden kann, insbesondere wobei in der dritten Steuerleitung (122) ein hin zum ersten Kanal (102) des zweiten Paares verschließbares Rückschlagventil (78) sitzt.

6. Fluid-Steuerungseinheit (44) nach einem der vorhergehenden Ansprüche, **dadurch gekennzeichnet, dass** stromabwärts des ersten Ventils (70) ein in Richtung hin zum Ventil (70) verschließbares Rückschlagventil (74) sitzt.

7. Fluid-Steuerungseinheit (44) nach einem der vorhergehenden Ansprüche, **dadurch gekennzeichnet, dass** alle ersten und zweiten Kanäle (100, 102, 104, 106), der Verbindungskanal (108) und die Steuerleitungen (114, 122, 124) in einem durch ein additives Herstellungsverfahren erzeugten ein- oder mehrteiligen, verrohrungsfreien Körper ausgebildet sind und das zumindest eine Ventil (70, 72) in dem Körper sitzt.

8. Fluid-Steuerungseinheit (44) nach einem der vorhergehenden Ansprüche, **dadurch gekennzeichnet, dass** stromaufwärts jedes Paares von Fluideingängen (50, 52, 60, 62) ein Steuerungsventil (82, 84) sitzt, über das wahlweise der jeweils erste oder zweite Fluideingang (50, 60, 52, 62) des entsprechenden Paares mit einer Druckfluidquelle (80) koppelbar ist.

9. Linearmodul (10) mit einer ersten fluidisch angetriebenen Kolben-Zylindereinheit (16) und einer zweiten fluidisch angetriebenen Kolben-Zylindereinheit (18), die einen geringeren maximalen Hubweg als die erste Kolben-Zylindereinheit (16) hat, wobei beide Kolben-Zylindereinheiten (16, 18) parallele Bewegungsrichtungen und jeweils einen Kolben (28, 30) und einen Zylinder (24, 26) aufweisen, von denen einer ein feststehendes Teil und der andere ein angetriebenes Teil ist, und mit einer Schnittstelle (14), an der ein durch das Linearmodul (10) linear verfahrbares Element (12) befestigbar ist, wobei die beiden feststehenden Teile stationär befestigt sind und nicht bewegt werden und das angetriebene Teil der ersten Kolben-Zylindereinheit (16) mit der Schnittstelle (14) fest gekoppelt ist, um diese zwischen einer eingefahrenen Ausgangsstellung und einer maximal verfahrenen Endstellung zu verstellen, und wobei das angetriebene Teil der zweiten Kolben-Zylindereinheit (16) in einer wahlweise zuschaltbaren Zwischenstellung zwischen Ausgangs- und Endstellung mechanisch die Bewegung der ersten Kolben-Zylindereinheit (16) blockiert, und wobei eine Fluid-Steuerungseinheit (44) nach einem der vorhergehenden Ansprüche vorgesehen ist, welche die beiden Kolben-Zylindereinheiten (16, 18) steuert und das Ventil (70), welches den Verbindungskanal (108) wahlweise freigeben kann, in einem seiner Schaltzustände und zumindest in der zuschaltbaren Zwischenstellung einen Druckfluidzulauf zu einer Arbeitskammer der ersten Kolben-Zylindereinheit (16) zum Rückhub der ersten Kolben-Zylindereinheit (16) strömungsmäßig mit einer Arbeitskammer der zweiten Kolben-Zylindereinheit (16) zum Vorhub der zweiten Kolben-Zylindereinheit (16) verbindet, so dass beide Kolben-Zylindereinheiten (16, 18) mit dem Druckfluid versorgt sind.

10. Linearmodul (10) nach Anspruch 9, **dadurch gekennzeichnet, dass** die Schnittstelle (14) eine Platte ist und die Kolben-Zylindereinheiten (16, 18) in Seitenansicht der Platte vorzugsweise vollständig unterhalb einer Oberseite der Platte angeordnet sind.

11. Linearmodul (10) nach Anspruch 9 oder 10, **dadurch gekennzeichnet, dass** die Kolben-Zylindereinheiten (16, 18) nebeneinander angeordnet sind und die zweite Kolben-Zylindereinheit (18) nur über einen Teil der Bewegungsstrecke der Schnittstelle (14) mit dieser in Bewegungsrichtung gekoppelt ist und in einer Teilstrecke zwischen der Zwischenstellung und der Endstellung von der Schnittstelle (14) in Bewegungsrichtung entkoppelt ist.

12. Linearmodul (10) nach einem der Ansprüche 9 bis 11, **dadurch gekennzeichnet, dass** die Kolben-Zylindereinheiten (16, 18) so ausgebildet sind, dass die zweite Kolben-Zylindereinheit (18) die Schnittstelle (14) von der Grundstellung in die Zwischenstellung bewegen kann und die erste Kolben-Zylindereinheit (16) die Schnittstelle (14) von der Zwischenstellung in die Endstellung bewegt.

13. Linearmodul (10) nach einem der Ansprüche 9 bis 12, **dadurch gekennzeichnet, dass** die Kolben-Zylindereinheiten (16, 18) so ausgebildet sind, dass die erste Kolben-Zylindereinheit (16) die Schnittstelle (14) von der Endstellung bis in die Grundstellung bewegt und die zweite Kolben-Zylindereinheit (16) in ihrer maximal ausgefahrenen Stellung bei einer Bewegung der Schnittstelle (14) von der Endstellung in die Grundstellung einen Anschlag für die Schnittstelle (14) in der Zwischenstellung bildet.

14. Linearmodul (10) nach einem der Ansprüche 9 bis 13, **dadurch gekennzeichnet, dass** die erste Kolben-Zylindereinheit (16) einen geringeren Zylinderquerschnitt als die zweite Kolben-Zylindereinheit (16) hat und/oder dass die Rückzugskraft der ersten Kolben-Zylindereinheit (16) in Richtung zur Ausgangsstellung kleiner als die Vorschubkraft der zweiten Kolben-Zylindereinheit (18) ist.

15. Linearmodul (10) nach einem der Ansprüche 9 bis 14, **dadurch gekennzeichnet, dass** die Fluid-Steuerungseinheit (44) so ausgebildet ist, dass bei Bewegen der Schnittstelle (14) von der Ausgangs- in die Zwischenstellung die zweite Kolben-Zylindereinheit (16) in Vorhub und die erste Kolben-Zylindereinheit (16) in Rückhub fluidisch geschaltet sind.
